# EUROPÄISCHE PATENTSCHRIFT

(11) **EP 1 208 243 B1**
(45) Veröffentlichungstag und Bekanntmachung des Hinweises auf die Patenterteilung: **29.01.2003**
(21) Anmeldenummer: 00929496.8
(22) Anmeldetag: 05.05.2000
(51) Int. Cl.: C21D 1/10, C21D 9/14

(54) **VERFAHREN ZUM HÄRTEN MINDESTENS EINER FLÄCHE EINER WAND EINES BAUTEILS UND VORRICHTUNG ZU SEINER DURCHFÜHRUNG**
METHOD FOR HARDENING AT LEAST ONE SURFACE OF A COMPONENT WALL AND A DEVICE FOR CARRYING OUT SAID METHOD
PROCEDE DE DURCISSAGE D'AU MOINS UNE SURFACE D'UNE PAROI D'UN ELEMENT DE CONSTRUCTION ET DISPOSITIF PERMETTANT SA REALISATION

(30) Priorität: 30.07.1999 DE 19935884
(43) Veröffentlichungstag der Anmeldung: 29.05.2002
(73) Patentinhaber: ELOTHERM GmbH, 42897 Remscheid (DE)
(72) Erfinder: LEISSNER, Hans-Jürgen, D-42855 Remscheid (DE); SCHULTE, Peter, D-42119 Wuppertal (DE); GEZARZICK, Waldemar, D-42857 Remscheid (DE); DYKSIK, Richard, D-42899 Remscheid (DE)
(74) Vertreter: Simons, Johannes, Dipl.-Ing.
(86) Internationale Anmeldenummer: EP0004020
(87) Internationale Veröffentlichungsnummer: WO01009395

(56) Entgegenhaltungen:
- EP-A- 0 070 409
- DE-A- 19 624 499
- DE-C- 965 816
- US-A- 4 375 997
- PATENT ABSTRACTS OF JAPAN vol. 009, no. 108 (C-280), 11. Mai 1985 (1985-05-11) & JP 60 002627 A (NTN TOYO BEARING KK), 8. Januar 1985 (1985-01-08)

## Beschreibung

Die Erfindung betrifft ein Verfahren zum Härten mindestens einer Fläche einer Wand eines Bauteils und eine zur Durchführung dieses Verfahrens besonders geeignete Vorrichtung.

Beim Härten von Flächen an Wänden von Bauteilen besteht das Problem, daß einerseits die geforderte Qualität der Härtung erreicht werden soll, andererseits aber verhindert werden soll, daß die betreffende Wand die für den jeweiligen Einsatzzweck des Bauteils erforderliche Zähigkeit verliert. Daher ist es erforderlich, während der Erwärmung der zu härtenden Flächen eine Durcherwärmung der Wand zu unterbinden.

Dies kann bei der Verwendung von Induktoren, welche die zu härtenden Flächen durch Induktion eines elektromagnetischen Feldes erwärmen, dadurch erfolgen, daß die Eindringtiefe des vom Induktor erzeugten Feldes entsprechend der erforderlichen Tiefe der Härtung im Bereich der zu härtenden Fläche eingestellt wird. Dieses Vorgehen setzt jedoch voraus, daß im Bereich der zu härtenden Fläche eine ausreichende Wandstärke vorhanden ist. Andernfalls läßt sich eine Durcherwärmung der Wand und damit einhergehend deren Durchhärtung aufgrund von Wärmewanderung nicht verhindern.

Bei der Härtung relativ dünnwandiger Bauteile ist man daher in der Praxis dazu übergegangen, die Seite der Wand mit Flüssigkeit zu kühlen, welche der Wandseite gegenüberliegt, auf welcher die zu härtenden Flächen angeordnet sind. Durch eine geeignete Bemessung des Kühlflüssigkeitsstroms kann auch bei dünnwandigen Bauteilen die Eindringtiefe der vom Induktor in der Wand erzeugten Wärme und damit die Tiefe der Härtung im Bereich der zu härtenden Fläche eingestellt werden.

Die DE-A-19 624 499 und US-A-4 375 997 beschreiben ein Verfahren und eine Vorrichtung zur Härtung eines Werkstücks mittels einer Hochfrequenzinduktionserwärmung.

Besondere Anforderungen an das Härten von Flächen an den Wänden eines Bauteils ergeben sich im Bereich von frontgetriebenen Kraftfahrzeugen, bei denen das Antriebsmoment über Schiebeglieder übertragen wird, welche verschiebbar in einer sogenannten "Tripode" sitzen. Eine solche Tripode ist becherartig ausgebildet und weist mehrere winklig zueinander ausgerichtete, sich in Längsrichtung achsparallel zur Längsachse der Tripode erstreckende Stütz- und Laufflächen auf. An diesen Stütz- und Laufflächen sind die Schiebeglieder geführt. Gleichzeitig nehmen die Stützflächen das von den Schiebegliedern übertragene Drehmoment auf. Um dieser Belastung standhalten zu können, müssen die Stütz- und Laufflächen einer Härtung unterzogen werden. Gleichzeitig muß die Zähigkeit des Wandmaterials trotz der Härtung der Flächen erhalten bleiben, damit die Tripode den wechselnden Momentenbelastungen während des Fahrbetriebes standhalten kann.

Die Aufgabe der Erfindung besteht darin, ein Verfahren der voranstehend erläuterten Art zu schaffen, welches ein an die jeweiligen Anforderungen angepaßtes Härten mindestens einer Fläche auch an Wänden von komplex geformten Bauteilen mit geringer Wandstärke ermöglicht. Darüber hinaus soll eine zur Durchführung dieses Verfahrens geeignete Vorrichtung angegeben werden.

Diese Aufgabe wird hinsichtlich des Verfahrens zum Härten mindestens einer Fläche einer Wand eines Bauteils dadurch gelöst, daß die zu härtende Fläche mit mindestens einem Induktor induktiv erwärmt wird, daß während der Erwärmung der zu härtenden Fläche eine Flüssigkeit in einen zwischen der zu härtenden Fläche und dem Induktor vorhandenen Spalt gefüllt ist, daß ein von einer Brause abgegebener Flüssigkeitsstrahl auf die Seite der Wand, welche der mit den zu härtenden Flächen versehenen Seite der Wand gegenüberliegt, während der Erwärmung der zu härtenden Fläche gerichtet wird und daß mindestens ein von einer von dem Induktor getragenen weiteren Brause abgegebener Flüssigkeitsstrahl auf eine an die zu härtende Fläche angrenzende Zone der Wand gerichtet wird, welche von der Erwärmung durch den Induktor ausgeschlossen sein soll.

Gemäß der Erfindung wird nicht nur die Seite der Wand mit Kühlflüssigkeit benetzt, welche der mit der zu härtenden Fläche versehenen Wandseite gegenüberliegt, sondern es wird zusätzlich Flüssigkeit auf die Zone der Wandseite gerichtet, welche an die zu härtende Fläche angrenzt und nicht von der Härtung erfaßt werden soll. Der zusätzliche Flüssigkeitsstrahl transportiert die Wärme ab, welche in der von der Erwärmung auszuschließenden Zone aufgrund der Wirkung des induzierten elektromagnetischen Feldes entsteht. Auf diese Weise kann im Bereich der zu härtenden Flächen nicht nur die Eindringtiefe der Härtezone, sondern auch ihre flächige Ausbreitung gezielt vorausbestimmt werden.

Die erfindungsgemäße Vorgehensweise ermöglicht es damit, exakt umrissene Härtezonen auszubilden, deren Erstreckung und Tiefe an die jeweiligen konstruktiven Anforderungen und Belastungen des mit den gehärteten Flächen versehenen Bauteils angepaßt sind. So kann beispielsweise dadurch, daß die Flüssigkeitsstrahlen jeweils nur abschnittweise oder in einem bestimmten Verlauf auf die mit der zu härtenden Fläche versehene Wand gerichtet werden und die dort entstehende Wärme abtransportieren, ein entsprechend der Ausrichtung und des Verlaufs der Flüssigkeitsstrahlen exakt ausgebildeter Verlauf des Randes der gehärteten Flächen erzeugt werden. Auf diese Weise läßt sich beispielsweise an genau den Stellen ausreichend weiches Wandmaterial zur Verfügung stellen, an denen aus konstruktiven oder montagetechnischen Gründen nach der Härtung der Wandflächen eine Verformung durchgeführt werden soll.

Gleichzeitig ist dadurch, daß der zwischen dem Induktor und der zu härtenden Fläche bestehende Spalt mit Flüssigkeit gefüllt ist, sichergestellt, daß das vom Induktor erzeugte Feld gleichmäßig in die zu erwärmende Wand eindringt. Auf diese Weise kann trotz der während der Erwärmung der Flächen ständig zugeführten Kühlflüssigkeitsströme, welche andernfalls zu einer Störung der Gleichmäßigkeit der Erwärmung führen würden, ein homogenes Bearbeitungsergebnis gewährleistet werden.

Besonders geeignet ist das erfindungsgemäße Verfahren zur Härtung von Flächen an Wänden von solchen Bauteilen, bei denen die Wand einen Innenraum umschließt und die zu härtenden Flächen auf der dem Innenraum zugeordneten Seite der Wand angeordnet sind. Bei derartigen Bauteilen kann die gleichmäßige Befüllung des Spaltes zwischen dem Induktor und der zu härtenden Fläche auf besonders einfache Weise gewährleistet werden. Darüber hinaus können besonders bei derart ausgebildeten Bauelementen auf einfache Weise mehrere Flächen gleichzeitig gehärtet werden. Dies gilt insbesondere auch dann, wenn jeweils mindestens zwei aneinander angrenzende Flächen gleichzeitig gehärtet werden, die winklig zueinander angeordnet sind, wie es beispielsweise bei den eingangs erläuterten Tripoden der Fall ist.

Eine besonders intensive, kurzfristige und auf eine bestimmte, eng umrissene Fläche und Tiefe beschränkte induktive Erwärmung der zu härtenden Fläche kann dadurch erreicht werden, daß das elektromagnetische Feld bei einer hohen Frequenz erzeugt wird. So kann die induktive Erwärmung der zu härtenden Flächen vorteilhaft beispielsweise bei einer Frequenz von bis zu 80 kHz erfolgen.

Eine zur Durchführung des erfindungsgemäßen Verfahrens besonders geeignete Vorrichtung ist mit einem Induktor zum Erwärmen der zu härtenden Fläche, mit einer Flüssigkeitszuführung, über welche Flüssigkeit in den Spalt zwischen dem Induktor und der zu härtenden Fläche tritt, mit einer ersten Brause, welche mindestens einen Flüssigkeitsstrahl auf die Seite der Wand richtet, welche der mit der zu härtenden Fläche versehenen Seite der Wand gegenüberliegt, und mit mindestens einer weiteren Brause, welche von dem Induktor getragen ist und einen Flüssigkeitsstrahl gegen die an die zu härtende Fläche angrenzende, von der Härtung auszuschließenden Zone der Wand richtet.

Eine solche Ausgestaltung der erfindungsgemäßen Vorrichtung läßt sich mit geringem technischen Aufwand verwirklichen und führt zu einer kompakten Form der erforderlichen Bauelemente. Letzteres ist immer dann besonders wesentlich, wenn innerhalb der Vorrichtung nur geringer Platz für den Induktor und die Brausen zur Verfügung steht.

Weitere vorteilhafte Ausgestaltungen des erfindungsgemäßen Verfahrens und der zu dessen Durchführung geeigneten Vorrichtung sind in den abhängigen Ansprüchen angegeben und werden nachfolgend im Zusammenhang mit einem Ausführungsbeispiel anhand einer Zeichnung näher erläutert. Es zeigen:

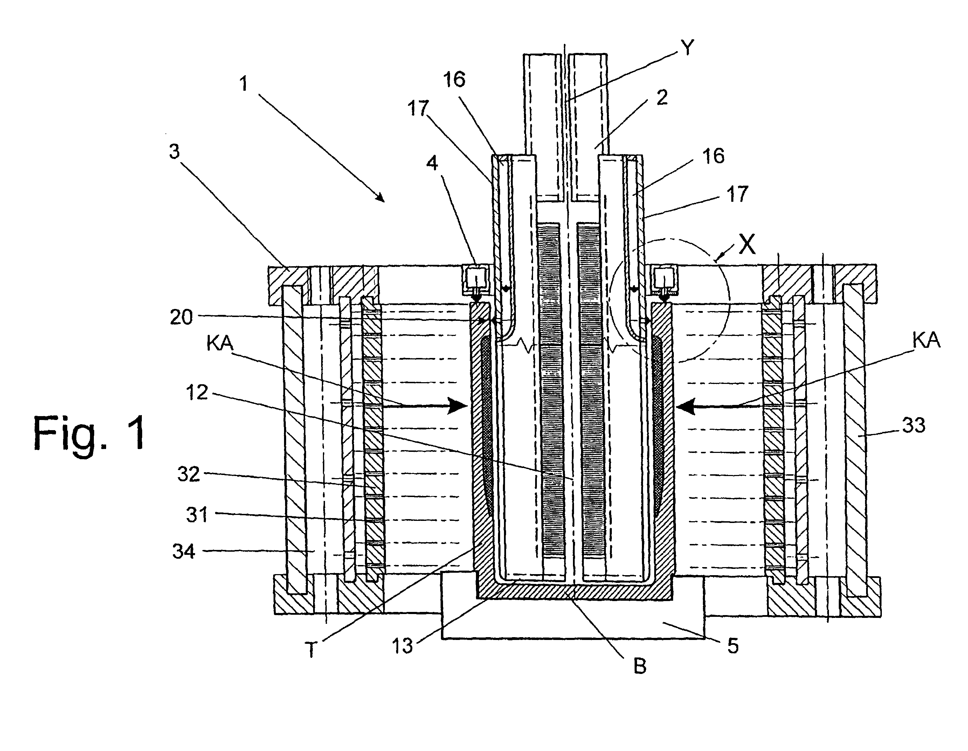

- Fig. 1: eine Vorrichtung zum Härten der Stütz- und Lauffläche einer Tripode in einem Längsschnitt;

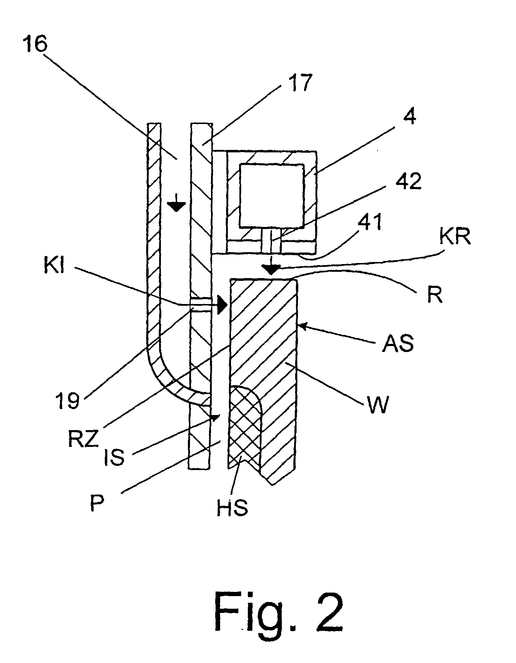

- Fig. 2: einen Ausschnitt "X" der Fig. 1 in vergrößerter Darstellung;
- Fig. 3: die Vorrichtung gemäß Fig. 1 in einem Querschnitt;

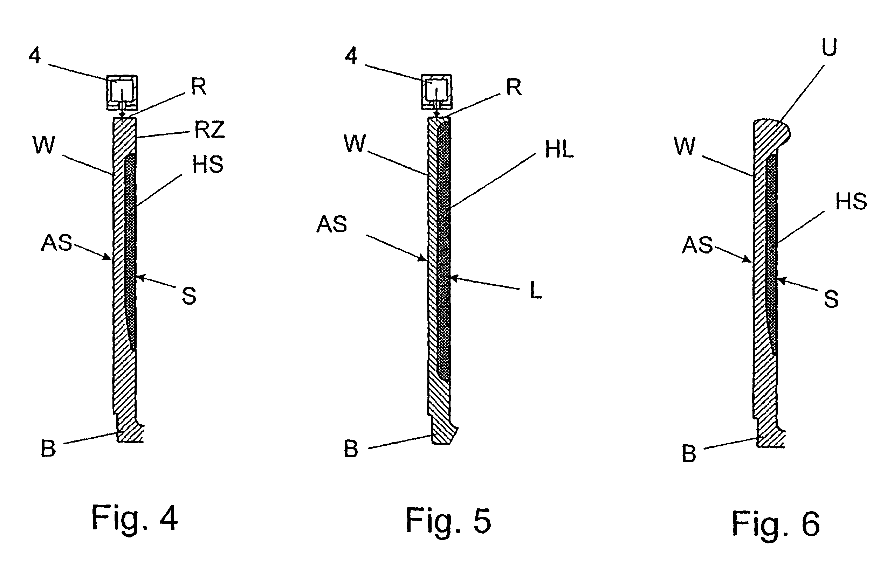

- Fig. 4: die Tripode in einem Schnitt entsprechend der in Fig. 3 eingezeichneten Schnittlinie A-B;
- Fig. 5: die Tripode in einem Schnitt entsprechend der in Fig. 3 eingezeichneten Schnittlinie C-D;
- Fig. 6: die Tripode nach einer im Anschluß an das Härten der Stütz- und Laufflächen erfolgten Stauch-Verformung in einem Schnitt entsprechend der in Fig. 3 eingezeichneten Schnittlinie A-B.

Die Vorrichtung 1 zum Härten der Stützflächen S und der Laufflächen L einer Tripode T weist einen Induktor 2, eine Außenbrause 3, eine Stirnflächenbrause 4 und einen Werkstückhalter 5 auf.

Die Tripode T ist becherförmig ausgebildet und weist eine einen Innenraum I umschließende Wand W auf, die auf einem Boden B aufsteht. Vom Innenraum I ausgehend sind in die Wand W jeweils um 120° im Querschnitt sternförmig versetzt zueinander nutenartige Führungsbahnen F für nicht dargestellte Schiebeglieder eingeformt, die sich achsparallel zur Längsachse X der Tripode T erstrecken. In den Eckbereichen E1, E2 dieser Führungsbahnen F sind jeweils eine Lauffläche L und eine Stützfläche S im Querschnitt rechtwinklig zueinander ausgebildet, wobei die Stützfläche S entsprechend der Form der nicht gezeigten Schiebeglieder eingewölbt ist.

Die äußere Form des in seiner Längsrichtung anheb- und absenkbaren Induktors 2 ist so an die Form des Innenraums I der Tripode T angepaßt, daß der Induktor 2 mit jeweils einem radial vorstehenden Abschnitt in die Führungsbahnen F der Tripode T greift. Dabei sind die Abmessungen des Induktors 2 so ausgelegt, daß bei in die Tripode T eingeführtem Induktor 2 zwischen dessen äußerer Begrenzung 7 und der Innenseite IS der Wand W der Tripode T ein umlaufender Spalt P vorhanden ist.

Die den Eckbereichen E1,E2 der Führungsbahnen F zugeordneten Eckbereiche der vorstehenden Abschnitte des Induktors 2 sind jeweils durch einen Heizleiter 10 mit der erforderlichen Beblechung 11 gebildet. Koaxial zur Längsachse Y des Induktors 2 ist darüber hinaus eine Zuführleitung 12 für Kühlflüssigkeit positioniert. Die Zuführleitung 12 ist mit einer nicht dargestellten Flüssigkeitsversorgung verbunden und mündet auf der Stirnseite 13 des Induktors 2. Über von der Zuführleitung 12 radial abgehende Kanäle 14 tritt zusätzlich Flüssigkeit in die zwischen den Heizleitern 10 bzw. der Beblechung 11 verbliebenen Freiräume 15 aus.

Im oberen Teil des Induktors 2 ist in jedem der radial vorstehenden Abschnitte des Induktors 2 ein Kanal 16 ausgebildet, welcher wie die Zuführleitung 12 mit der nicht dargestellten Flüssigkeitsversorgung verbunden ist. Dabei sind die Kanäle 16 jeweils den Stützflächen S der Führungsbahnen F der Tripode T zugeordnet. In die Außenwand 17 der Kanäle 16 sind radial nach außen weisende Austrittsöffnungen 19 eingeformt, welche bei in die Tripode T eingeführtem Induktor 2 jeweils auf die zwischen dem oberen Rand R der Wand W und dem oberen Rand der zu härtenden Stützfläche S angeordneten Randzone RZ der Innenseite IS der Wand W der Tripode T gerichtet sind. Auf diese Weise ist am Induktor 2 eine Brause 20 ausgebildet, welche Flüssigkeitsstrahlen KI auf von der Härtung auszuschließende, an die zu härtenden Flächen unmittelbar angrenzende Zonen RZ der Tripode T richtet.

Die Außenbrause 3 ist ringförmig ausgebildet und umgibt mit ihrer mit regelmäßig angeordneten Austrittsöffnungen 31 versehenen Innenwand 32 die auf dem Werkstückhalter 5 stehende Tripode T. Zwischen der Außenwand 33 und der Innenwand 32 der Außenbrause 3 ist ein Kanal 34 ausgebildet, der ebenfalls mit der nicht dargestellten Flüssigkeitsversorgung verbunden ist.

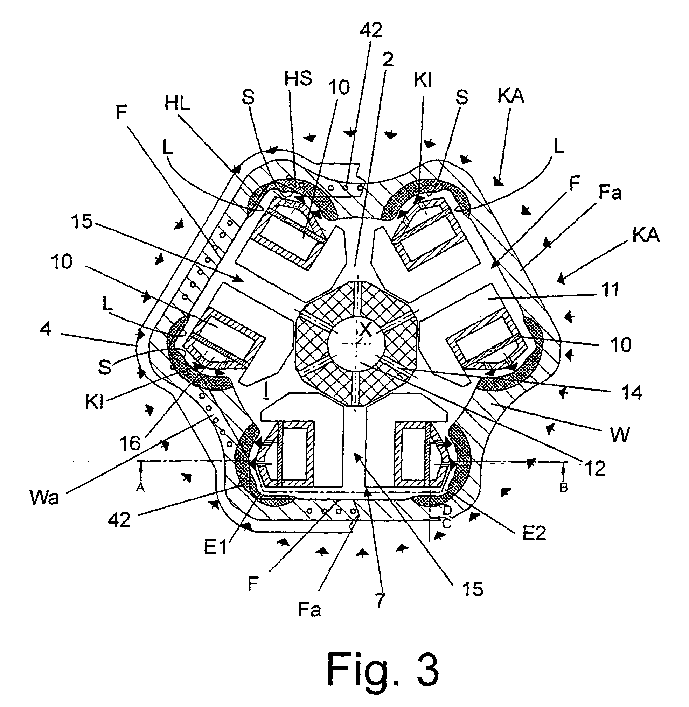

Die Stirnflächenbrause 4 wird von dem Induktor 2 getragen, so daß sie mit diesem in Richtung der Tripode T abgesenkt oder von dieser angehoben wird. Die Form der Stirnflächenbrause 4 ist an den Verlauf des oberen Randes R der Tripode T so angepaßt, daß ihre untere Stirnfläche 41 jeweils benachbart zur Stirnfläche des oberen Randes R der Tripode T verläuft. In den Abschnitten der Stirnflächenbrause 4, die den Stützflächen S, den Wandabschnitten Wa zwischen den Führungsbahnen F und den nicht gehärteten Wandabschnitten Fa der Führungsbahnen F zwischen den Laufbahnen L zugeordnet sind, sind in die Stirnfläche 41 jeweils Austrittsbohrungen 42 eingeformt, die auf den Rand R der Tripode T gerichtet sind. (In Fig. 3 ist die Stirnflächenbrause 4 der Deutlichkeit halber nur zu einer Hälfte dargestellt.)

Zum Härten der Stützflächen S und der Laufflächen L der Tripode T wird der Induktor 2 in den Innenraum I der Tripode T abgesenkt. In dieser abgesenkten Stellung befindet sich die Mündung der Zuführleitung 12 in geringem Abstand zum Boden B der Tripode T. Ebenso beabstandet ist die Stirnflächenbrause 4 vom Rand R der Tripode T. Die Austrittsdüsen der Brause 20 sind auf den ihnen jeweils zugeordneten Abschnitt des Randbereichs RZ der Tripode T gerichtet.

Anschließend werden die Außenbrause 3, die Stirnflächenbrause 4 und die Brause 20 sowie die Zuführleitung 12 von der nicht gezeigten Flüssigkeitsversorgung mit Kühlflüssigkeit beaufschlagt, so daß Kühlflüssigkeitsstrahlen KA die Außenseite AS der Wand W, Kühlflüssigkeitstrahlen KR die den Austrittsöffnungen 42 der Stirnflächenbrause 4 zugeordneten Abschnitte der Stirnfläche im Bereich des oberen Randes R der Wand W und Kühlstrahlen KI die an die zu härtenden Stützflächen S unmittelbar angrenzenden Randzonen RZ der Wand W der Tripode T kühlen. Die aus der Mündung der Zuführleitung 12 und den von der Zuführleitung 12 abgehenden Kanälen 14 austretende Kühlflüssigkeit füllt den zwischen der Wand W und dem Induktor 2 vorhandenen Spalt P.

Anschließend werden die Stütz- und Laufflächen S,L der Führungsbahnen F durch die Einwirkung des von den Heizleitern 10 erzeugten elektromagnetischen Feldes induktiv auf die für die gewünschte Härtung erforderliche Temperatur gebracht. Nach Beendigung der Erwärmung werden die erwärmten Laufflächen von dem aus der Zuführleitung 12 austretenden Kühlflüssigkeitsstrom abgeschreckt. Die anschließend im Bereich der Laufflächen L jeweils vorhandene Härtezone HL reicht in Längsrichtung bis unter den Rand R der Wand W, da in diesem Bereich keine Kühlstrahlen KI von der Brause 20 abgegeben worden sind. Im Bereich der Stützflächen S ist dagegen zwischen der zugehörigen Härtezone HS und dem Rand R die Randzone RZ ungehärtet geblieben, da in dieser Zone die durch die Kühlflüssigkeitsstrahlen KI erfolgte Kühlung während der Erwärmung der Stütz- und Laufflächen S,L wirksam gewesen ist. Aufgrund der Kühlung der Außenseite AS der Wand W ist die Tiefe t beider Härtezonen HL,HS etwa auf die Hälfte der Wandstärke der Wand W beschränkt.

Nachdem die nicht gezeigten Schiebeglieder in der Tripode T montiert sind, wird die Tripode T in einer ebenfalls nicht dargestellten Vorrichtung einer Stauchung unterzogen, durch welche im Bereich der nicht gehärteten Randzone RZ ein in den Innenraum I der Tripode T vorstehender Wulst U erzeugt wird. Dieser verhindert ein Herausfallen der in der Tripode T montierten Schiebeglieder.

### BEZUGSZEICHENLISTE

- 1: Vorrichtung zum Härten
- 2: Induktor
- 3: Außenbrause
- 4: Stirnflächenbrause
- 5: Werkstückhalter
- 7: äußere Begrenzung des Induktors 2
- 10: Heizleiter
- 11: Beblechung
- 12: Zuführleitung
- 14: Kanäle
- 13: Stirnseite des Induktors 2
- 15: Freiräume
- 16: Kanäle
- 17: Außenwand der Kanäle 16
- 19: Austrittsöffnungen
- 20: Brause
- 31: Austrittsöffnungen
- 32: Innenwand
- 33: Außenwand
- 34: Kanal
- 41: Stirnfläche
- 42: Austrittsbohrungen

- AS: Außenseite der Wand W
- B: Boden
- E1,E2: Eckbereiche
- F: Führungsbahnen
- Fa: Wandabschnitte
- HL,HS: Härtezone
- I: Innenraum
- IS: Innenseite der Wand W
- KA: Kühlflüssigkeitsstrahlen
- KI: Flüssigkeitsstrahlen
- KR: Kühlflüssigkeitstrahlen
- L: Laufflächen
- P: Spalt
- R: Rand
- RZ: Randzone
- S: Stützflächen
- T: Tripode
- t: Tiefe der Härtezonen HL, HS
- U: Wulst
- W: Wand
- Wa: Wandabschnitte
- X: Längsachse der Tripode T
- Y: Längsachse des Induktors 2

## Patentansprüche

1. Verfahren zum Härten mindestens einer Fläche (S,L) einer Wand (W) eines Bauteils (T),
- bei dem die zu härtende Fläche (S,L) mit mindestens einem Induktor (2) induktiv erwärmt wird,
- bei dem während der Erwärmung der zu härtenden Fläche (S,L) eine Flüssigkeit in einen zwischen der zu härtenden Fläche (S,L) und dem Induktor (2) vorhandenen.Spalt (P) gefüllt ist,
- bei dem ein von einer Brause (3) abgegebener Flüssigkeitsstrahl (KA) auf die Seite (AS) der Wand (W), welche der mit den zu härtenden Flächen (S,L) versehenen Seite (IS) der Wand (W) gegenüberliegt, während der Erwärmung der zu härtenden Fläche (S,L) gerichtet wird und
- bei dem mindestens ein von einer von dem Induktor (2) getragenen weiteren Brause (20) abgegebener Flüssigkeitsstrahl (KI) auf eine an die zu härtende Fläche (S,L) angrenzende Zone (RZ) der Wand (W) gerichtet wird, welche von der Erwärmung durch den Induktor (2) ausgeschlossen sein soll.

2. Verfahren nach Anspruch 1, **dadurch gekennzeichnet, daß** die Wand (W) einen Innenraum (I) umschließt und daß die zu härtende Fläche (S,L) auf der dem Innenraum (I) zugeordneten Seite (IS) der Wand (W) angeordnet ist.

3. Verfahren nach Anspruch 2, **dadurch gekennzeichnet, daß** das Bauteil (T) becherförmig ausgebildet ist.

4. Verfahren nach einem der voranstehenden Ansprüche, **dadurch gekennzeichnet, daß** jeweils mindestens zwei aneinander angrenzende Flächen (S,L) gleichzeitig gehärtet werden, die winklig zueinander angeordnet sind.

5. Verfahren nach einem der voranstehenden Ansprüche, **dadurch gekennzeichnet, daß** die von der Erwärmung ausgeschlossene Zone (RZ) der Wand (W) zwischen einem Rand (R) der Wand (W) und der zu härtenden Fläche (S,L) angeordnet ist.

6. Verfahren nach Anspruch 5, **dadurch gekennzeichnet, daß** während der Erwärmung der zu härtenden Flächen (S,L) auf den Rand (R) der Wand (W) Flüssigkeit aufgebracht wird.

7. Verfahren nach einem der voranstehenden Ansprüche, **dadurch gekennzeichnet, daß** das Bauteil (T) nach dem Härten der zu härtenden Flächen (S,L) einer Stauchung unterzogen wird, durch welche im Bereich der von der Erwärmung ausgeschlossenen Zone (RZ) ein Wulst (W) ausgebildet wird.

8. Verfahren nach Anspruch 2 und 7, **dadurch gekennzeichnet, daß** der Wulst (W) in den Innenraum (I) gerichtet ist.

9. Verfahren nach einem der voranstehenden Ansprüche, **dadurch gekennzeichnet, daß** die induktive Erwärmung der zu härtenden Flächen (S,L) bei einer Frequenz von bis zu 80 kHz erfolgt.

10. Vorrichtung zur Durchführung des Verfahrens nach einem der Ansprüche 1 bis 9, mit einem Induktor (2) zum Erwärmen der zu härtenden Fläche (S,L), mit einer Flüssigkeitszuführung (12), über welche Flüssigkeit in den Spalt (P) zwischen dem Induktor (2) und der zu härtenden Fläche (S,L) tritt, mit einer ersten Brause (3), welche mindestens einen Flüssigkeitsstrahl (KA) auf die Seite (AS) der Wand (W) richtet, welche der mit der zu härtenden Fläche (S,L) versehenen Seite (IS) der Wand (W) gegenüberliegt, und mit mindestens einer weiteren Brause (20), welche von dem Induktor (2) getragen ist und einen Flüssigkeitsstrahl (KI) gegen die an die zu härtende Fläche (S,L) angrenzende, von der Härtung auszuschließenden Zone (RZ) der Wand (W) richtet.

11. Vorrichtung nach Anspruch 10, **dadurch gekennzeichnet, daß** die Flüssigkeitszuführung als in dem Induktor (2) angeordnete Flüssigkeitsleitung (12) ausgebildet ist, die auf einer Seite (13) des Induktors (2) mündet.

12. Vorrichtung nach Anspruch 11, **dadurch gekennzeichnet, daß** die Flüssigkeitsleitung (12) achsparallel und eng benachbart zu den Heizleitern (10) des Induktors (2) verläuft.

13. Vorrichtung nach einem der Ansprüche 10 bis 12, **dadurch gekennzeichnet, daß** der Induktor (2) mehrere achsparallel zu einer Längsachse (Y) angeordnete Heizleiter (10) aufweist.

14. Vorrichtung nach einem der Ansprüche 12 oder 13, **dadurch gekennzeichnet, daß** die Flüssigkeitsleitung (12) koaxial zur Längsachse (Y) des Induktors (2) angeordnet ist.

15. Vorrichtung nach einem der Ansprüche 12 bis 14, **dadurch gekennzeichnet, daß** die Flüssigkeitsleitung (12) auf einer Stirnseite (13) des Induktors (2) mündet.

16. Vorrichtung nach Anspruch 15, **dadurch gekennzeichnet, daß** in dem Induktor (2) ein Kanal (16) ausgebildet ist, welcher die Brause (20) mit Flüssigkeit versorgt.

17. Vorrichtung nach einem der voranstehenden Ansprüche, **dadurch gekennzeichnet, daß** eine weitere Brause (4) einen Flüssigkeitsstrahl (KR) auf einen Rand (R) der mit den zu härtenden Flächen (S,L) versehenen Wand (W) richtet.

18. Vorrichtung nach Anspruch 17, **dadurch gekennzeichnet, daß** die weitere Brause (4) mit dem Induktor (2) verkoppelt ist.

## Claims

1. A process for the hardening of at least one area (S,L) of a wall (W) of a component (T),
- in which the area to be hardened (S,L) is heated inductively with at least one inductor (2),
- in which, during the heating of the area to be hardened (S,L), a liquid is filled into a gap (P) present between the area to be hardened (S,L) and the inductor (2),
- in which a liquid jet (KA) delivered by a sprinkling rose (3) is directed, during the heating of the area to be hardened (S,L), onto the side (AS) of the wall (W) which lies opposite the side (IS) of the wall (W) provided with the areas to be hardened (S,L) and
- in which at least one liquid jet (KI) delivered by a further sprinkling rose (20) carried by the inductor (2) is directed onto a zone (RZ) of the wall (W) adjacent to the area to be hardened (S,L), which zone is to be excluded from the heating by the inductor (2).

2. The process according to claim 1, **characterised in that** the wall (W) encloses an internal space (I) and that the area to be hardened (S,L) is arranged on the side (IS) of the wall (W) assigned to the internal space (I).

3. The process according to claim 2, **characterised in that** the component (T) is designed cup-shaped.

4. The process according to any one of the preceding claims, **characterised in that** at least two areas (S,L) adjacent to one another, which are arranged at an angle to one another are simultaneously hardened.

5. The process according to any one of the preceding claims, **characterised in that** the zone (RZ) of the wall (W) excluded from the heating is arranged between an edge (R) of the wall (W) and the area to be hardened (S,L).

6. The process according to claim 5, **characterised in that** liquid is applied to the edge (R) of the wall (W) during the heating of the areas to be hardened (S,L).

7. The process according to any one of the preceding claims, **characterised in that**, after the hardening of the areas to be hardened (S,L), the component (T) undergoes an upsetting deformation, as a result of which a bulge (W) is formed in the area of the zone (RZ) excluded from the heating.

8. The process according to claim 2 and 7, **characterised in that** the bulge (W) is directed into the interior space (I).

9. The process according to any one of the preceding claims, **characterised in that** the inductive heating of the areas to be hardened (S,L) takes place at a frequency of up to 80 kHz.

10. A device for the implementation of the process according to any one of claims 1 to 9, with an inductor (2) for heating the area to be hardened (S,L), with a liquid feed (12), via which liquid enters into the gap (P) between the inductor (2) and the area to be hardened (S,L), with a first sprinkling rose (3), which directs at least one liquid jet (KA) onto the side (AS) of the wall (W) which lies opposite the side (IS) of the wall (W) provided with the area to be hardened (S,L), and with at least one further sprinkling rose (20), which is carried by the inductor (2) and directs a liquid jet (KI) against the zone (RZ) of the wall (W) adjacent to the area to be hardened (S,L) and to be excluded from the hardening.

11. The device according to claim 10, **characterised in that** the liquid feed is designed as a liquid conduit (12) arranged in the inductor (2), said liquid conduit emerging on a side (13) of the inductor (2).

12. The device according to claim 11, **characterised in that** the liquid conduit (12) runs axis-parallel and in close proximity to the heating conductors (10) of the inductor (2).

13. The device according to any one of claims 10 to 12, **characterised in that** the inductor (2) has several heating conductors (10) arranged axis-parallel to a longitudinal axis (Y).

14. The device according to any one of claims 12 to 13, **characterised in that** the liquid conduit (12) is arranged coaxial with the longitudinal axis (Y) of the inductor (2).

15. The device according to any one of claims 12 to 14, **characterised in that** the liquid conduit (12) emerges on an end face (13) of the inductor (2).

16. The device according to claim 15, **characterised in that** a channel (16) which supplies the sprinkling rose (20) with liquid is formed in the inductor (2).

17. The device according to any one of the preceding claims, **characterised in that** a further sprinkling rose (4) directs a liquid jet (KR) onto an edge (R) of the wall (W) provided with the areas to be hardened (S,L).

18. The device according to claim 17, **characterised in that** the further sprinkling rose (4) is coupled with the inductor (2).

## Revendications

1. Procédé de durcissement d'au moins une surface (S, L) d'une paroi (W) d'un élément de construction (T), dans lequel :
■ la surface à durcir (S, L) est chauffée par induction avec au moins une inductance (2),
■ au cours du chauffage de la surface à durcir (S, L), l'intervalle (P) présent entre la surface à durcir (S, L) et l'inductance (2) est rempli d'un liquide,
■ un jet de liquide (KA) délivré par une douche (3) est dirigé sur la face (AS) du mur (W) qui est à l'opposé de la face (IS) du mur (W) pourvue des surfaces à durcir (S, L) au cours du chauffage des surfaces à durcir (S, L), et
■ au moins un jet de liquide (KI) délivré par une autre douche (20) portée par l'inductance (2) est dirigé sur une zone (RZ) du mur (W), contiguë à la surface à durcir (S, L), qui doit être exclue du chauffage par l'inductance (2).

2. Procédé selon la revendication 1, **caractérisé en ce que** le mur (W) enserre un espace interne (I) et **en ce que** la surface à durcir (S, L) est aménagée sur la face (IS) du mur (W) affectée à l'espace interne (I).

3. Procédé selon la revendication 2, **caractérisé en ce que** l'élément de construction (T) se présente en forme de coupe.

4. Procédé selon l'une quelconque des revendications précédentes, **caractérisé en ce qu'**on durcit simultanément respectivement au moins deux surfaces (S, L) contiguës l'une à l'autre qui forment un angle l'une avec l'autre.

5. Procédé selon l'une quelconque des revendications précédentes, **caractérisé en ce que** la zone (RZ) du mur (W) exclue du chauffage est disposée entre un bord (R) du mur (W) et la surface à durcir (S, L).

6. Procédé selon la revendication 5, **caractérisé en ce qu'**on applique un liquide sur le bord (R) du mur (W) au cours du chauffage des surfaces à durcir (S, L).

7. Procédé selon l'une quelconque des revendications précédentes, **caractérisé en ce qu'**on soumet l'élément de construction (T), après durcissement des surfaces à durcir (S, L), à un refoulement qui a pour effet de former un renflement (W) à proximité de la zone (RZ) exclue du chauffage.

8. Procédé selon les revendications 2 et 7, **caractérisé en ce que** le renflement (W) est dirigé dans l'espace intérieur (I).

9. Procédé selon l'une quelconque des revendications précédentes, **caractérisé en ce que** le chauffage inducteur des surfaces à durcir (S, L) se fait à une fréquence jusqu'à 80 kHz.

10. Dispositif pour réaliser le procédé selon l'une quelconque des revendications 1 à 9, comprenant une inductance (2) pour chauffer la surface à durcir (S, L), une alimentation en liquide (12), par laquelle un liquide pénètre dans l'intervalle (S) entre l'inductance (2) et la surface à durcir (S, L), une première douche (3), qui dirige au moins un jet de liquide (KA) sur la face (AS) du mur (W), qui est à l'opposé de la face (IS) du mur (W) pourvue de la surface à durcir (S, L), et au moins une autre douche (20), qui est portée par l'inductance (2) et dirige un jet de liquide (KI) contre la zone (RZ) du mur (W), contiguë à la surface à durcir (S, L), à exclure du durcissement.

11. Dispositif selon la revendication 10, **caractérisé en ce que** l'alimentation en liquide se présente sous la forme d'une conduite de liquide (12) disposée dans l'inductance (2) et qui débouche sur une face (13) de l'inductance (2).

12. Dispositif selon la revendication 11, **caractérisé en ce que** la conduite de liquide (12) s'étend parallèlement à l'axe et au voisinage étroit des conducteurs chauffants (10).

13. Dispositif selon l'une quelconque des revendications 10 à 12, **caractérisé en ce que** l'inductance (2) présente plusieurs conducteurs chauffants (10) aménagés parallèlement à un axe longitudinal (Y).

14. Dispositif selon l'une quelconque des revendications 12 ou 13, **caractérisé en ce que** la conduite d'alimentation (12) est aménagée coaxialement avec l'axe longitudinal (Y) de l'inductance (2).

15. Dispositif selon l'une quelconque des revendications 12 à 14, **caractérisé en ce que** la conduite de liquide (12) débouche sur une face frontale (13) de l'inductance (2).

16. Dispositif selon la revendication 15, **caractérisé en ce qu'**il est formé dans l'inductance (2) un canal (16) qui alimente en liquide la douche (20).

17. Dispositif selon l'une quelconque des revendications précédentes, **caractérisé en ce qu'**une autre douche (4) dirige un jet de liquide (KR) sur un bord (R) du mur (W) pourvu des surfaces à durcir (S, L).

18. Dispositif selon la revendication 17, **caractérisé en ce que** l'autre douche (4) est couplée à l'inductance (2).
